# EUROPÄISCHE PATENTSCHRIFT

(11) **EP 1 190 476 B1**
(45) Veröffentlichungstag und Bekanntmachung des Hinweises auf die Patenterteilung: **24.02.2010**
(21) Anmeldenummer: 00931285.1
(22) Anmeldetag: 06.06.2000
(51) Int. Cl.: H02J 5/00, G05B 19/042

(54) **SYSTEM FÜR EINE EINE VIELZAHL VON AKTOREN AUFWEISENDE MASCHINE**
SYSTEM FOR A MACHINE WITH A PLURALITY OF ACTUATORS
SYSTEME POUR UNE MACHINE PRESENTANT UNE PLURALITE D'ACTIONNEURS

(30) Priorität: 11.06.1999 DE 19926562; 26.06.1999 DE 19929344
(43) Veröffentlichungstag der Anmeldung: 27.03.2002
(73) Patentinhaber: ABB Research Ltd., 8050 Zürich (CH)
(72) Erfinder: SCHEIBLE, Guntram, D-69493 Hirschberg (DE); SMAILUS, Bernd, D-69502 Hemsbach (DE); KLAUS, Martin, D-64625 Bensheim (DE); GARRELS, Kai, D-68239 Mannheim (DE); HEINEMANN, Lothar, D-69493 Hirschberg (DE)
(74) Vertreter: Miller, Toivo
(86) Internationale Anmeldenummer: PCT/EP2000/005138
(87) Internationale Veröffentlichungsnummer: WO 2000/077910

(56) Entgegenhaltungen:
- WO-A-89/10030
- DE-A- 4 442 677
- DE-C- 19 528 341
- DE-C- 19 735 624
- US-A- 5 153 583
- KAWAMURA A ET AL: "WIRELESS TRANSMISSION OF POWER AND INFORMATION THROUGH ONE HIGH FREQUENCY RESONANT AC LINK INVERTER FOR ROBOT MANIPULATOR APPLICATIONS" RECORD OF THE INDUSTRY APPLICATIONS CONFERENCE (IAS),US,NEW YORK, IEEE, Bd. CONF. 30, 8. Oktober 1995 (1995-10-08), Seiten 2367-2372, XP000547151 ISBN: 0-7803-3009-9

## Beschreibung

Die Erfindung bezieht sich auf ein System mit einer eine Vielzahl von Aktoren aufweisenden Maschine gemäß dem Oberbegriff des Anspruchs 1. Die Erfindung kann beispielsweise zur elektrischen Energieversorgung von mikromechanischen, piezoelektrischen, elektrochemischen, magnetostriktiven, elektrostriktiven, elektrostatischen oder elektromagnetischen Aktoren verwendet werden, wie sie in Aktoren-Systemen oder Maschinen, beispielsweise bei Steuer/Regelsystemen, in Fernsteuersystemen, in der Robotertechnik, bei Herstellungsautomaten bzw. Fertigungsautomaten, als Anzeigeelemente und in Schutz- und Sicherheitssystemen (beispielsweise bei Freiluft- oder Innenraum-Schaltanlagen) zum Einsatz gelangen.

Aus der DE 44 42 677 A1 sind ein Verfahren und eine Anordnung zum Versorgen eines elektrischen Verbrauchers mit einer elektrischen Versorgungsspannung oder einem elektrischen Versorgungsstrom bekannt, wobei Funkwellen eines Funksenders zu einem mit dem Verbraucher elektrisch verbundenen Funkempfänger übertragen werden und vom Funkempfänger in die elektrische Versorgungsspannung bzw. den elektrischen Versorgungsstrom umgewandelt werden. Die Funkwellen können aus dem elektromagnetischen Hochfrequenzbereich (Radiowellen) oder auch aus dem Mikrowellenbereich (Richtfunk) kommen.

Dabei ist es von Nachteil, dass aufgrund der hohen Frequenzen und dementsprechend kleinen Antennen einerseits und der durch EMV-Vorschriften und Regeln für Sicherheit und Gesundheitsschutz an Arbeitsplätzen mit Exposition durch elektrische, magnetische oder elektromagnetische Felder beschränkten zulässigen Sendeleistung andererseits nur sehr unzureichend geringe Abstände zwischen Funksender und Funkempfänger erzielbar sind. Das gleiche trifft für die erzielbaren Leistungen zu, welche im Bereich weniger µW liegen, was meist unzureichend für Aktoren ist.

Aus der WO 89/10030 A ist ein Aktor- und Kommunikationssystem bekannt, bei dem eine Basisstation bzw. Abfragestation ein Magnetfeld abstrahlt, das von einer Aufnahmespule eines Aktors aufgenommen und verwertet wird. Das aus dem Magnetfeld gewonnene Signal wird gleichgerichtet und dient zur Leistungsversorgung des Aktors. Gleichzeitig werden im Magnetfeld auch Daten von der Basisstation zum Aktor übertragen, welche durch Demodulation beim Aktor gewonnen werden. Eine Datenübertragung vom Aktor zur Basisstation kann mittels Funksignalen erfolgen.

Aus der US-A-5153583 ist ein portabler passiver Transponder zur Durchführung elektronischer Funktionen bekannt, wobei eine einzige Antenne dazu verwendet wird, Energie induktiv und Daten mittels Funk zu übertragen, z. B. in Form eines energieliefernden elektromagnetischen Feldes und einer Frequenzumtastmodulation dieses Feldes als Datensignal. Für den Empfang des energieliefernden elektromagnetischen Feldes können auch mehr als eine Wicklung vorgesehen sein.

Der Erfindung liegt die Aufgabe zugrunde, ein kostengünstiges und zuverlässiges System mit einer eine Vielzahl von Aktoren aufweisenden Maschine anzugeben.

Diese Aufgabe wird in Verbindung mit den Merkmalen des Oberbegriffes erfindungsgemäß durch die im Kennzeichen des Anspruchs 1 angegebenen Merkmale gelöst.

Unter den in diesem Zusammenhang interessierenden mittelfrequenten Schwingungen wird der Bereich von etwa 15 kHz bis etwa 15 MHz verstanden.

Die mit der Erfindung erzielbaren Vorteile bestehen insbesondere darin, dass im Vergleich zu konventionellen Lösungen mit Kabelanschluss zur elektrischen Energieversorgung der Aktoren der durch Planung, Material, Installation, Dokumentation und Wartung bedingte relativ hohe Kostenfaktor eines Kabelanschlusses entfällt. Es können keine Ausfälle aufgrund von Kabelbrüchen oder schlechten, beispielsweise korrodierten Kontakten auftreten.

Im Vergleich zur Verwendung von Batterien zur Energieversorgung von Aktoren entfällt der Wartungsaufwand und Kostenaufwand, der durch den erforderlichen Austausch von Batterien - zumal an schwer zugänglichen Stellen - bedingt ist.

Im angegebenen Mittelfrequenz-Bereich von etwa 15 kHz bis etwa 15 MHz sind die sich durch Skineffekte ergebenden Nachteile, beispielsweise die auftretenden Verluste, noch handhabbar. Die elektromagnetischen Wellen werden aufgrund der im Vergleich zu den auftretenden Wellenlängen zu kleinen und deshalb als Antennen unwirksamen Primärwicklungen nicht abgestrahlt, wodurch ein einfacher Aufbau der Anordnungen ermöglicht wird. Eine EMV-Messung von eventuell abgestrahlten Störungen muß nicht erfolgen. Günstig wirkt sich zudem aus, daß mittelfrequente Magnetfelder durch metallische Maschinen-Komponenten nur in geringem Ausmaß abgeschirmt werden, so daß vorteilhaft auch an unzugänglichen Stellen eines Aktoren-Systems bzw. einer Maschine ein zur Energieversorgung ausreichend starkes Magnetfeld auftritt.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig.1: ein Prinzipschaltbild der Anordnung zur drahtlosen elektrischen Versorgung von Aktoren,
- Fig. 2: ein Schaltbild zur Erläuterung des verwendeten Transformatorprinzips,
- Fig.3: eine erste praktische Ausführungsform,
- Fig.4: eine zweite praktische Ausführungsform,
- Fig.5: eine dritte Ausführungsform mit orthogonalen Primärwicklungen,
- Fig.6: eine vierte Ausführungsform mit unterschiedlich gestalteten Primärwicklungen,
- Fig.7: eine fünfte Ausführungsform mit bandförmiger Primärwicklung,
- Fig.8: ein Ersatzschaltbild mit primärseitigen und sekundärseitigen Weiterbildungen,
- Fig.9: eine Primärwicklung gemäß sechster Ausführungsform,
- Fig. 10: eine Detailansicht einer Ecke einer Primärwicklung gemäß sechster Ausführungsform,
- Fig. 11: eine Detailansicht der Wicklungseinspeisung bei der sechsten Ausführungsform,
- Fig. 12: eine Primärwicklung gemäß siebter Ausführungsform,
- Fig. 13: eine Detailansicht der Wicklungseinspeisung bei der siebten Ausführungsform,
- Fig. 14: eine Detailansicht einer Ecke einer Primärwicklung gemäß siebter Ausführungsform,
- Fig. 15: eine Primärwicklung gemäß achter Ausführungsform.

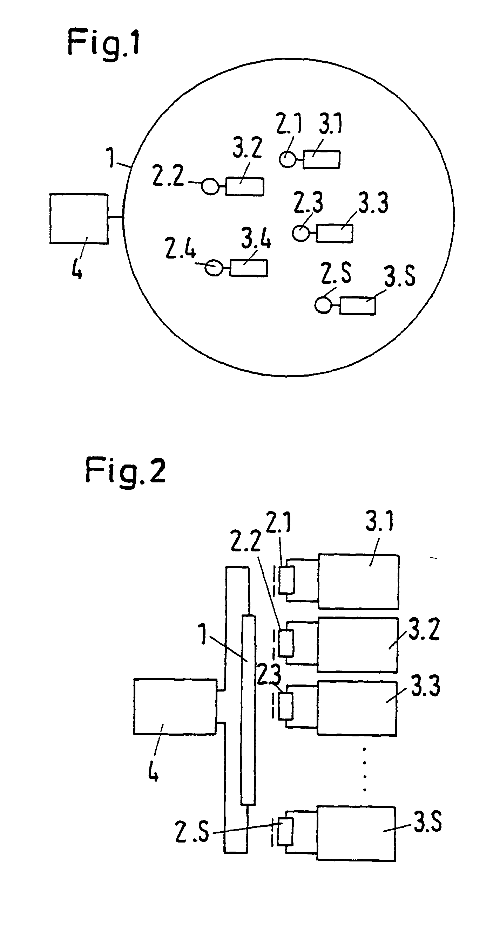

In Fig. 1 ist ein Prinzipschaltbild der Anordnung zur drahtlosen elektrischen Versorgung von Aktoren dargestellt. Es ist eine kreisförmige, vorzugsweise aus mehreren Windungen aufgebaute Primärwicklung 1 zu erkennen, welche eine Vielzahl - gegebenenfalls bis zu einigen Hundert - von Sekundärwicklungen 2.1, 2.2, 2.3....2.s (s = beliebige ganze Zahl) umfaßt, wobei jede Sekundärwicklung 2.1 bzw. 2.2 bzw. 2.3....2.s mit einem Aktor 3.1 bzw. 3.2 bzw. 3.3....3.s verbunden ist. Die Primärwicklung 1 ist an einen Oszillator 4 (Mittelfrequenz-Oszillator) angeschlossen. Der Oszillator 4 speist die Primärwicklung 1 mit einer mittelfrequenten Schwingung im Bereich von etwa 15 kHz bis etwa 15 MHz. Diese Mittelfrequenz würde zur Abstrahlung von elektromagnetischen Feldern führen, deren Wellenlängen größer als 22 m bis 22 km sind und damit wesentlich größer als die Abmessungen der eingesetzten Primärwicklung - kleiner als 2 m - , so daß die Primärwicklung nicht als Antenne für derartige elektromagnetische Strahlung wirkt. Es liegt also eine rein magnetische Kopplung (und keine wirksame elektromagnetische Kopplung) zwischen der Primärwicklung und den Sekundärwicklungen im Sinne eines Mittelfrequenz-Transformators vor.

Als Aktoren werden beispielsweise mikromechanische, piezoelektrische, elektrochemische, magnetostriktive, elektrostriktive, elektrostatische oder elektromagnetische Aktoren eingesetzt.

In Fig. 2 ist ein Schaltbild zur Erläuterung des verwendeten Transformatorprinzips dargestellt. Es sind wiederum die Primärwicklung 1 mit einspeisendem Oszillator 4 und die Aktoren 3.1....3.s mit den angeschlossenen Sekundärwicklungen 2.1....2.s zu erkennen.

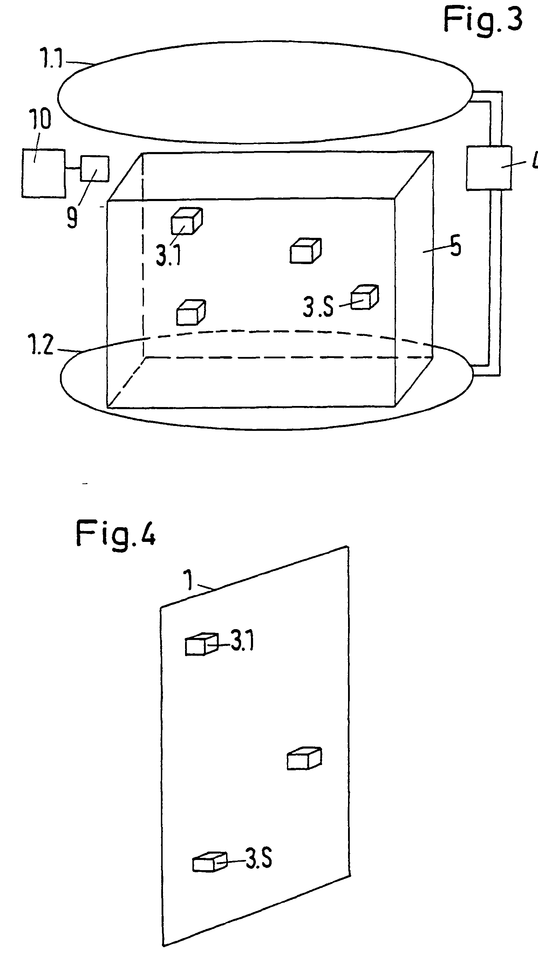

In Fig. 3 ist eine erste praktische Ausführungsform dargestellt. Es ist ein Aktoren-System 5 - insbesondere eine Maschine bzw. ein Industrieroboter bzw. Herstellungsautomat bzw. Fertigungsautomat - gezeigt, welches mit zahlreichen an unterschiedliche, zumindest teilweise bewegliche Systemkomponenten montierten Aktoren 3.1....3.s versehen ist. Die Aktoren 3.1...3.s dienen beispielsweise als Anzeigeelemente, als Steuer/Regelelemente und als Schutz/Sicherheitselemente. Das Aktoren-System 5 befindet sich zwischen zwei horizontal angeordneten Primärwicklungen 1.1 und 1.2. Diese beiden Primärwicklungen 1.1, 1.2 liegen elektrisch parallel am Oszillator 4 (Generator) oder werden alternativ von zwei separaten Oszillatoren gespeist. Zwischen beiden Primärwicklungen tritt ein relativ gleichmäßiges Magnetfeld auf. Von Wichtigkeit ist es dabei, daß sich die Aktoren stets im sich zwischen beiden Primärwicklungen 1.1, 1.2 ausbildenden magnetischen Feld befinden, so daß über ihre Sekundärwicklungen eine magnetische Ankopplung wirksam und demzufolge eine Energieeinspeisung möglich ist.

Jeder Aktor ist mit einer Empfangseinrichtung und Sendeeinrichtung ausgestattet, die Funksignale hinsichtlich der Befehle an die Aktoren zur Ausführung bestimmter Handlungen empfängt und Funksignale hinsichtlich aktueller Aktor-Informationen, wie die Rückmeldungen "gewünschte Handlung erfolgreich/nicht erfolgreich ausgeführt" abgibt. Die Funksignale zu allen Aktoren bzw. von allen Aktoren werden von einer zentralen Sende/Empfangseinrichtung 9 abgegeben bzw. empfangen und von einem Prozeßrechner 10 (speicherprogrammierbare Steuerung) vorgegeben bzw. an diesen weitergeleitet. Vorzugsweise befindet sich die Sende/Empfangseinrichtung in unmittelbarer Nähe des Aktoren-Systems 5, um eine optimale Funkverbindung mit den Aktoren zu gewährleisten, während der die Maschine steuernde Prozeßrechner 10 auch entfernt vom Aktoren-System 5 angeordnet sein kann. Wie leicht erkennbar ist, ergibt sich durch das vorgeschlagene System eine kabellose Konfiguration der Aktoren sowohl hinsichtlich ihrer elektrischen Energieversorgung als auch hinsichtlich der Informationsübertragung vom und zum Prozeßrechner 10.

In Fig. 4 ist eine zweite praktische Ausführungsform dargestellt. Bei dieser Ausführungsform ist lediglich eine einzige Primärwicklung 1 vorgesehen, welche das Aktoren-System 5 - insbesondere ein Industrieroboter bzw. Herstellungsautomat bzw. Fertigungsautomat - mit den zahlreichen, an ihm montierten Aktoren 3.1....3.s global umfaßt.

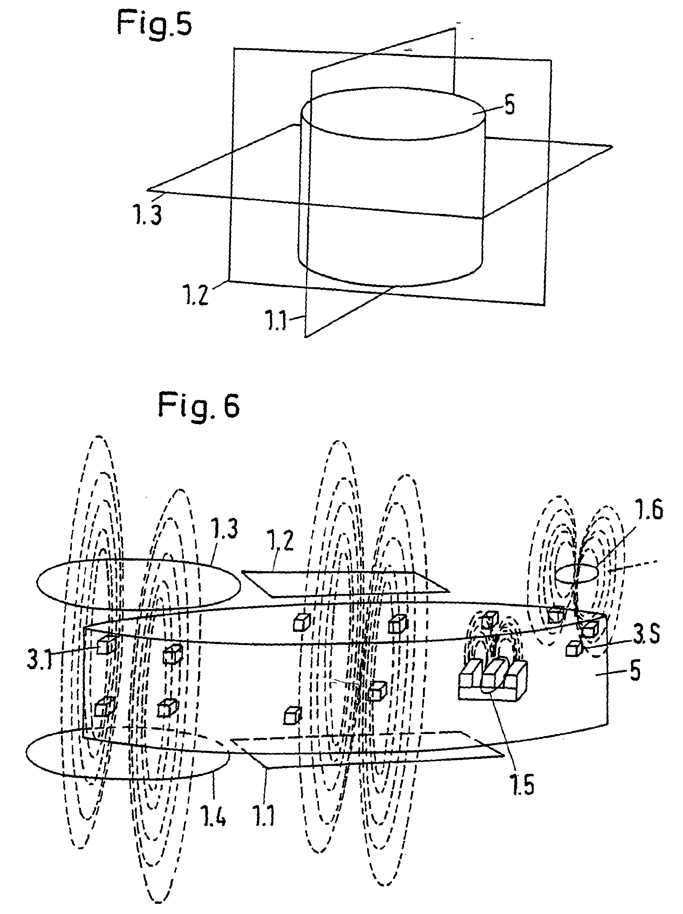

In Fig. 5 ist eine dritte Ausführungsform mit drei orthogonal zueinander angeordneten Primärwicklungen dargestellt. Es ist ein Aktoren-System 5 gezeigt, welches von einer ersten vertikalen Primärwicklung 1.1, einer hierzu orthogonalen zweiten vertikalen Primärwicklung 1.2 und einer horizontalen dritten Primärwicklung 1.2 umschlossen ist. Bei dieser Ausführungsform mit drei orthogonalen Primärwicklungen ergibt sich eine besonders gleichmäßige und nicht gerichtete Ausbildung des magnetischen Feldes. Alternativ bzw. ergänzend hierzu ist es auch möglich, jeden Aktor mit zwei oder drei orthogonalen Sekundärwicklungen auszurüsten.

Des weiteren ist auch eine Ausführungsform realisierbar, bei der lediglich zwei orthogonale Primärwicklungen vorgesehen sind. Selbstverständlich sind auch Ausführungsformen realisierbar, welche mehrere Primärwicklungen 1.1 bis 1.p aufweisen, die nicht orthogonal angeordnet sind.

In Fig. 6 ist eine vierte Ausführungsform mit mehreren unterschiedlich gestalteten Primärwicklungen dargestellt. Es handelt sich um ein relativ ausgedehntes Aktoren-System 5, bei dem die einzelnen Aktoren 3.1....3.s nicht einigermaßen homogen über das System verteilt angeordnet sind, sondern lediglich an einigen bestimmten Bereichen des Systems gehäuft auftreten. Bei einer derartigen ausgedehnten Konfiguration ist aus Gründen der zu erzielenden magnetischen Feldstärke der Einsatz mehrerer, gezielt angeordneter Primärwicklungen vorteilhaft, welche jeweils mindestens eine Sekundärwicklung eines Aktors lokal beeinflussen.

Ein erster mit Aktoren bestückter Systembereich liegt dabei im Magnetfeld zwischen zwei horizontalen, rechteckförmigen, sich einander gegenüberliegenden Primärwicklungen 1.1, 1.2. Ein zweiter, hierzu benachbarter, mit Aktoren bestückter Systembereich liegt im Magnetfeld zwischen zwei horizontalen, kreisringförmigen oder ovalen, sich einander gegenüberliegender Primärwicklungen 1.3, 1.4. Ein dritter mit Aktoren bestückter Systembereich wird vom Magnetfeld einer Primärwicklung 1.5 beeinflußt, wobei diese Primärwicklung um den Mittelschenkel eines E-förmigen Ferritkernes angeordnet ist, wodurch sich teilweise eine Abschirmung des Magnetfeldes und sich teilweise eine Verstärkung im interessierenden, lokal begrenzten Bereich ergibt ("Spot-Wirkung"). Ein vierter mit Aktoren bestückter Systembereich liegt im Einflußbereich einer Primärwicklung 1.6. Die Magnetfelder der einzelnen Primärwicklungen 1.1 bis 1.6 in den einzelnen Systembereichen sind jeweils gestrichelt angedeutet.

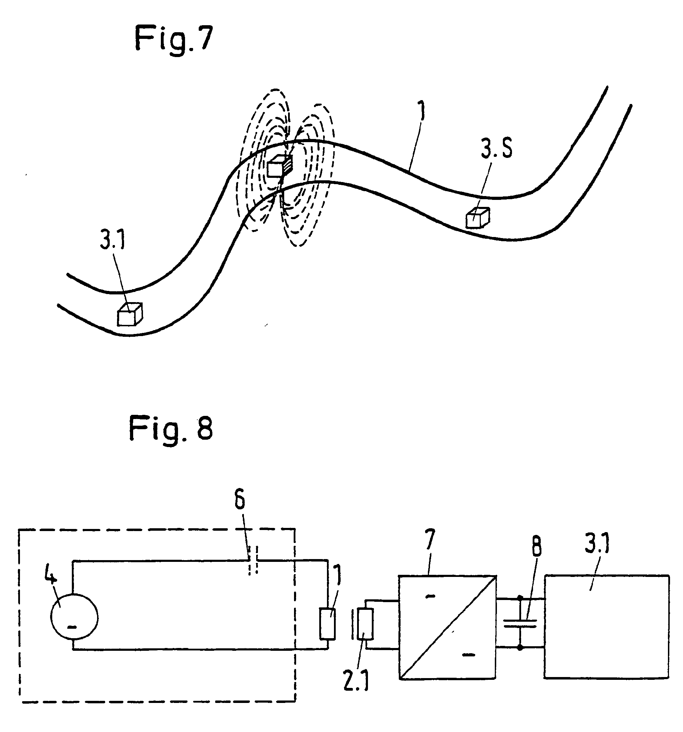

In Fig. 7 ist eine fünfte Ausführungsform mit bandförmiger Primärwicklung dargestellt. Die bandförmige Primärwicklung 1 ist an ihrem einen Ende am Oszillator 4 angeschlossen, während das weitere Ende zusammengeschaltet ist. Auf diese Weise ergibt sich eine Doppelleitung mit zwei vom gleichen Strom mit entgegengesetzter Richtung durchflossenen Leitern, was das Magnetfeld zwischen beiden Leitern in gewünschter Weise verstärkt und das Magnetfeld im Bereich außerhalb der beiden Leiter abschwächt. Vorteilhaft wird die bandförmige Primärwicklung 1 an der Maschine derart installiert, daß sich die einzelnen Aktoren 3.1 bis 3.n im Bereich zwischen beiden Leitern der Doppelleitung befinden.

Selbstverständlich kann dabei jede Leitung der Doppelleitung aus mehreren Einzelleitern bestehen, wobei die Einzelleiter beider Leitungen im Sinne einer Wicklung miteinander verbunden sind, so daß sich quasi eine Primärwicklung 1 wie unter Fig. 4 beschrieben ergibt, welche extrem flach ausgebildet ist.

In Fig. 8 ist ein Ersatzschaltbild mit primärseitigen und sekundärseitigen Weiterbildungen dargestellt. Wie zu erkennen ist, liegt die Primärwicklung 1 über einem Kompensationskondensator 6 am Oszillator 4, wodurch ein resonanter Betrieb des Oszillators erzielt wird. Lediglich beispielhaft ist die magnetische Kopplung zwischen Primärwicklung 1 und Sekundärwicklung 2.1 angedeutet. An die Sekundärwicklung 2.1 ist ein AC/DC-Steller 7 angeschlossen, der einen zur Energieversorgung des Aktors 3.1 dienenden Energiespeicher 8 speist.

In Erweiterung des in Fig. 8 dargestellten Schaltbildes ist es auch möglich, einen Kompensationskondensator in der Anschlußleitung zwischen Sekundärwicklung 2.1 und AC/DC-Steller 7 vorzusehen.

Wicklungen werden üblicherweise durch Wickeln eines Leiters in mehreren Windungen gewünschter Anzahl hergestellt. Bei großflächig auszubildenden Wicklungen kann dies Schwierigkeiten bereiten, beispielsweise bei nachträglicher Integration einer relativ großen Primärwicklung in einem Herstellungs- bzw. Fertigungsautomaten oder allgemein in einer Maschine. Unter "relativ groß" ist zu verstehen, daß die Primärwicklung etwa die Größe des Herstellungsautomaten selbst aufweist.

Nachstehend werden Primärwicklungen gemäß sechster, siebter und achter Ausführungsform angegeben, die ohne Schwierigkeiten auch nachträglich in einer Anlage oder Maschine integriert werden können.

Dabei kann die Primärwicklung aus mehreren separaten, jeweils aus mehreren parallelen Leitern aufgebauten Wicklungsabschnitten bestehen, wobei die einzelnen Wicklungsabschnitte über Verbindungselemente mechanisch und elektrisch miteinander verbunden sind und wobei bei einem Verbindungselement zwei Wicklungsabschnitte versetzt gegeneinander elektrisch miteinander verbunden sind, wodurch sich zwei freie, zum Anschluß von Verbindungsleitungen zu einem Generator oder Oszillator geeignete Wicklungsenden ergeben.

Alternativ hierzu kann die Primärwicklung aus einem flexiblen, aus mehreren parallelen Leitern aufgebauten Kabel und einem Verbindungselement bestehen, welches die beiden Kabelenden versetzt gegeneinander elektrisch und mechanisch miteinander verbindet, wodurch sich zwei freie, zum Anschluß von Verbindungsleitungen zu einem Generator oder Oszillator geeignete Wicklungsenden ergeben.

Die mit der sechsten, siebten und achten Ausführungsform erzielbaren Vorteile bestehen insbesondere darin, daß die Primärwicklung auftrennbar ist und deshalb ein nachträglicher Einbau der vorgeschlagenen Primärwicklung in einer Maschine in einfacher Art möglich ist. Die Primärwicklung wird erst in der Maschine selbst durch Verbinden der einzelnen Wicklungsabschnitte bzw. des flexiblen Kabels unter Einsatz des mindestens einen Verbindungselementes hergestellt, wobei eine exakte Anpassung an die Maschine durch die Anzahl und Lage der Verbindungselemente und durch flexible Ausgestaltung der Wicklungsabschnitte, bestehend vorzugsweise aus flexiblem Flachbandkabel, ermöglicht wird. Der Einsatz von Flachbandkabel hat den weiteren Vorteil, daß das von der Primärwicklung produzierte Magnetfeld axial relativ breit ausgebildet ist, was die magnetische Ankopplung an weitere Wicklungen verbessert.

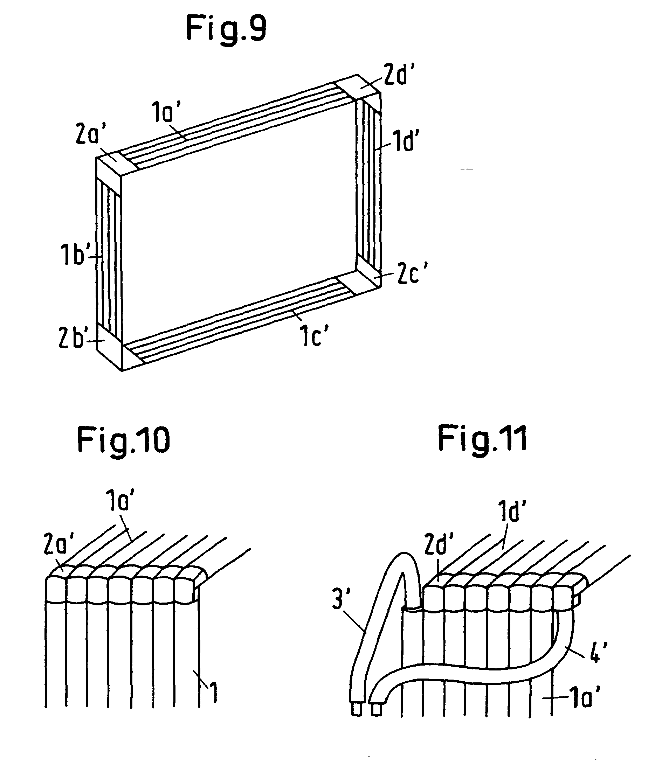

In Fig. 9 ist eine Primärwicklung gemäß sechster Ausführungsform dargestellt. Diese sechste Ausführungsform ist insbesondere für eine vertikale Anordnung der Primärwicklung geeignet. Die rechteckförmige Primärwicklung weist vier separate Wicklungsabschnitte 1 a', 1b', 1 c', 1 d' auf, die an den vier Ecken über Verbindungselemente 2a', 2b', 2c', 2d' elektrisch und mechanisch miteinander verbunden sind. Für die Wicklungsabschnitte 1a' bis 1 d' wird vorzugsweise flexibles mehradriges Flachbandkabel mit mehreren parallelen Leitern eingesetzt.

In Fig. 10 ist eine Detailansicht einer Ecke einer Primärwicklung gemäß sechster Ausführungsform dargestellt. Das gezeigte Verbindungselement 2a' weist sieben winkelförmig ausgebildete, in einer Reihe nebeneinander angeordnete und gegenseitig elektrisch isolierte Kontaktstellen mit jeweils zwei Anschlüssen für die beiden Wicklungsabschnitte 1a', 1 b' auf. Die Abwinkelung der nebeneinander angeordneten Kontaktstellen erfolgt in zwei Ebenen. Zur elektrischen Kontaktierung weisen diese Kontaktstellen beispielsweise Öffnungen mit Kontaktzungen auf, in welche die elektrischen Leiter der Wicklungsabschnitte eingesteckt werden.

In Fig. 11 ist eine Detailansicht der Wicklungseinspeisung bei der sechsten Ausführungsform dargestellt. Wie zu erkennen ist, sind die beiden Wicklungsabschnitte 1a', 1d' versetzt gegeneinander in das Verbindungselement 2d' eingesteckt. Die jeweils freien Enden des Wicklungsabschnittes 1 a' bzw. des Wicklungsabschnittes 1d' bilden die Wicklungsenden und sind mit einer Verbindungsleitung 3' bzw. 4' kontaktiert, welche andererseits mit einem Generator bzw. Oszillator verbunden sind. Die Kontaktierung zwischen der Verbindungsleitung 4' und dem Wicklungsabschnitt 1 d' erfolgt über das Verbindungselement 2d'. Die weitere elektrische Verbindung zwischen der Verbindungsleitung 3' und dem Wicklungsabschnitt 1a' erfolgt beispielsweise durch Verlöten.

Alternativ kann auch an der Wicklungseinspeisung ein Verbindungselement eingesetzt sein, das eine Kontaktstelle mehr aufweist, als dies der Anzahl der parallelen Leiter eines Wicklungsabschnittes entspricht. Dann können beide Kontaktierungen zwischen den Verbindungsleitungen 3', 4' und den Wicklungsabschnitten über das Verbindungselement selbst erfolgen.

Die weiteren Verbindungselemente 2b', 2c'der Primärwicklung sind in der gemäß Fig. 10 dargestellten Art und Weise mit den Wicklungsabschnitten verbunden. Insgesamt ergibt sich eine Primärwicklung mit sieben Windungen.

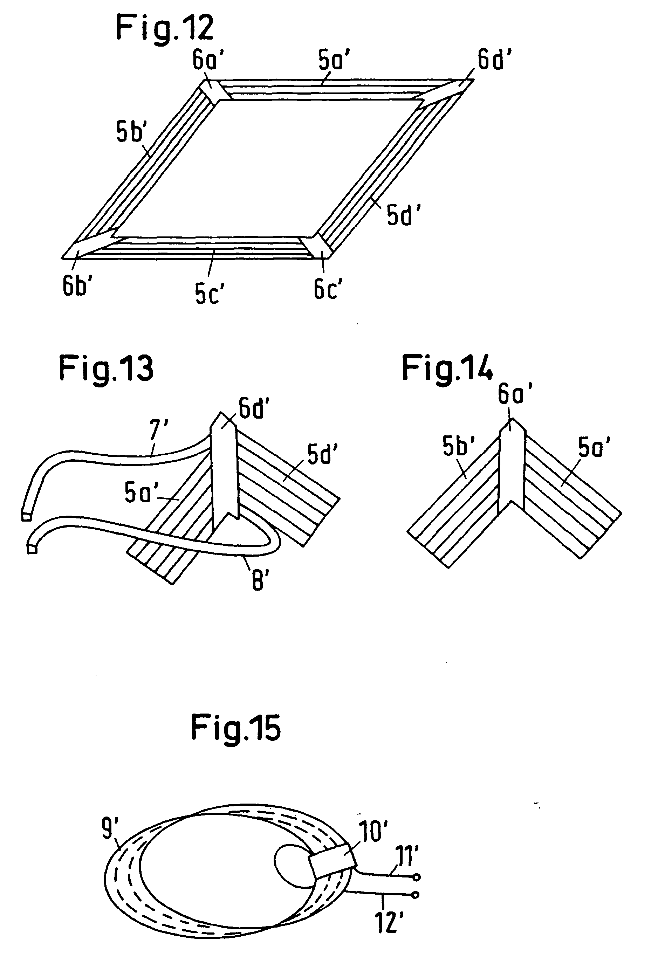

In Fig. 12 ist eine Primärwicklung gemäß siebter Ausführungsform dargestellt. Diese siebte Ausführungsform ist insbesondere für eine horizontale Anordnung der Primärwicklung geeignet. Die rechteckförmige Primärwicklung weist vier separate Wicklungsabschnitte 5a', 5b', 5c', 5d' auf, die an den vier Ecken über Verbindungselemente 6a', 6b', 6c', 6d' elektrisch und mechanisch miteinander verbunden sind. Für die Wicklungsabschnitte 5a' bis 5d' wird vorzugsweise mehradriges Flachbandkabel eingesetzt.

In Fig. 13 ist eine Detailansicht der Wicklungseinspeisung bei der siebten Ausführungsform dargestellt. Zur elektrischen Kontaktierung weisen die Verbindungselemente wiederum Öffnungen mit Kontaktzungen auf, in welche die elektrischen Leiter der Wicklungsabschnitte eingeführt werden. Wie zu erkennen ist, sind die beiden Wicklungsabschnitte 5a', 5d' versetzt gegeneinander in das Verbindungselement 6d' eingesteckt. Die jeweils freien Enden des Wicklungsabschnittes 5a' bzw. des Wicklungsabschnittes 5d' bilden die Wicklungsenden und sind mit einer Verbindungsleitung 8' bzw. 7' kontaktiert, welche andererseits mit einem Generator bzw. Oszillator verbunden sind. Da ein Verbindungselement 6d' eingesetzt ist, welches ein Kontaktpaar mehr aufweist als dies der Anzahl der parallelen Leiter der Wicklungsabschnitte entspricht, erfolgt die Kontaktierung zwischen der Verbindungsleitung 7' und dem Wicklungsabschnitt 5d' sowie die Kontaktierung zwischen der Verbindungsleitung 8' und dem Wicklungsabschnitt 5a' über das Verbindungselement 6d'.

In Fig. 14 ist eine Detailansicht einer Ecke einer Primärwicklung gemäß siebter Ausführungsform dargestellt. Das gezeigte Verbindungselement 6a' weist fünf winkelförmig ausgebildete, in einer Reihe nebeneinander angeordnete und gegenseitig elektrisch isolierte Kontaktstellen für die beiden Wicklungsabschnitte 5a', 5b' auf, wobei die Abwinkelungen der nebeneinander angeordneten Kontaktstellen in einer Ebene erfolgen. Die elektrische und mechanische Verbindung der weiteren Wicklungsabschnitte über die Verbindungselemente 6b' und 6c' erfolgt in gleicher Art und Weise.

Vorstehend ist ausgeführt, daß für die Wicklungsabschnitte 1 a' bis 1 d' und 5a' bis 5d' vorzugsweise mehradriges, flexibles Flachbandkabel eingesetzt wird. Alternativ hierzu ist es insbesondere zur Bildung einer sehr leistungsstarken Primärwicklung mit relativ hohem Stromdurchgang möglich, die Wicklungsabschnitte aus mehreren nebeneinander anzuordnenden, elektrisch gegeneinander zu isolierenden, starren Leiterstäben aufzubauen.

Vorstehend werden rechteckförmige Konfigurationen der Primärwicklung beschrieben, welche den Einsatz von Verbindungselementen mit rechtwinklig abgebogenen Kontaktstellen erfordern. Abweichend hiervon können selbstverständlich auch andere Wicklungs-Konfigurationen (dreieckig, fünfeckig usw.) realisiert werden.

Im einfachsten Fall ist eine aus einem flexiblen Kabel 9', insbesondere Flachbandkabel und einem einzigen Verbindungselement 10' bestehende Primärwicklung herstellbar, wobei die beiden Enden des Kabels über das einzige Verbindungselement 10' versetzt gegeneinander elektrisch miteinander verbunden sind, wodurch sich freie, zum Anschluß von Verbindungsleitungen 11', 12' zu einem Generator oder Oszillator geeignete Wicklungsenden ergeben. Eine derartige Primärwicklung ist in Fig. 15 gezeigt.

## Patentansprüche

1. System mit einer eine Vielzahl von Aktoren (3.1 bis 3.5) aufweisenden Maschine (5), insbesondere Fertigungsautomat, welche einen Prozessrechner (10) aufweist und mit einer mit diesem Prozessrechner verbundenen zentralen Sendeeinrichtung (9),
- wobei mindestens eine von einem mittelfrequenten Oszillator (4) gespeiste Primärwicklung (1, 1.1 bis 1.p) zur Erzeugung eines Magnetfeldes zur drahtlosen Versorgung der Aktoren (3.1 bis 3.s) mit elektrischer Energie vorgesehen ist, und,
- wobei jeder Aktor mit einer Empfangseinrichtung ausgestattet ist, welche Funksignale der zentralen Sendeeinrichtung empfängt,
**dadurch gekennzeichnet, dass** jeder Aktor (3.1 bis 3.s) mehrere zur Energieaufnahme aus dem mittelfrequenten Magnetfeld geeignete, zueinander orthogonal angeordnete Sekundärwicklungen (2.1 bis 2.s) aufweist.

2. System nach Anspruch 1, **gekennzeichnet durch** eine einzige, die Sekundärwicklungen (2.1 bis 2.s) der Aktoren (3.1 bis 3.s) global umfassende Primärwicklung (1).

3. System nach Anspruch 1, **gekennzeichnet durch** mindestens zwei parallel nebeneinander angeordnete Primärwicklungen (1.1, 1.2), zwischen denen die Sekundärwicklungen (2.1 bis 2.s) der Aktoren (3.1 bis 3.s) angeordnet sind.

4. System nach Anspruch 1, **gekennzeichnet durch** zwei orthogonal zueinander angeordnete Primärwicklungen (1.1, 1.2).

5. System nach Anspruch 1, **gekennzeichnet durch** drei orthogonal zueinander angeordnete Primärwicklungen (1.1, 1.2, 1.3).

6. System nach Anspruch 1, **gekennzeichnet durch** mindestens eine, mindestens eine Sekundärwicklung (2.1 bis 2.s) eines Aktors (3.1 bis 3.s) lokal beeinflussende Primärwicklung (1.1 bis 1.p).

7. System nach Anspruch 1, **gekennzeichnet durch** eine in Form einer Doppelleitung ausgeführte Primärwicklung (1), wobei die Sekundärwicklungen (2.1 bis 2.s) der Aktoren (3.1 bis 3.s) zwischen der Doppelleitung angeordnet sind.

8. System nach einem der vorstehenden Ansprüche, **dadurch gekennzeichnet, dass** mindestens eine Primärwicklung mit einem Ferritkern versehen ist.

9. System nach einem der vorstehenden Ansprüche, **dadurch gekennzeichnet, dass** die mindestens eine Primärwicklung mit einem Kompensationskondensator (6) beschaltet ist.

10. System nach mindestens einem der vorstehenden Ansprüche, **dadurch gekennzeichnet, dass** die Aktoren mit Sendeeinrichtungen versehen sind, welche interessierende Aktor-Informationen beinhaltende Funksignale an eine zentrale, mit dem Prozeßrechner (10) verbundene Empfangseinrichtung (9) abgeben, so daß ein bidirektionaler Informationsaustausch zwischen dem Prozeßrechner und den Aktoren möglich ist.

11. System nach mindestens einem der vorstehenden Ansprüche, **dadurch gekennzeichnet, dass** die Sekundärwicklungen (2.1 bis 2.s) mit einem Kompensationskondensator (6) beschaltet sind.

12. System nach mindestens einem der vorstehenden Ansprüche, **dadurch gekennzeichnet, dass** die Sekundärwicklungen (2.1 bis 2.s) mit einem AC/DC-Steller beschaltet sind, welcher einen Energiespeicher (8) auflädt.

## Claims

1. A system with a machine (5) comprising a plurality of actuators (3.1 to 3.s), especially an automated production machine, which machine comprises a process computer (10) and a central transmission device (9) which is connected with said process computer,
- with at least one primary winding (1, 1.1 to 1.p) being provided for generating a magnetic field for wireless supply of the actuators (3.1 to 3.s) with electric power, which winding is supplied by a medium-frequency oscillator (4);
- with each actuator being provided with a receiving device which receives radio signals of the central transmission device;
**characterized in that** each actuator (3.1 to 3.s) comprises several secondary windings (2.1 to 2.s) which are suitable for taking up power from the medium-frequency magnetic field and which are arranged orthogonally with respect to each other.

2. A system according to claim 1, **characterized by** a single primary winding (1) which globally comprises the secondary windings (2.1 to 2.s) of the actuators (3.1 to 3.s).

3. A system according to claim 1, **characterized by** at least two primary windings (1) which are arranged in parallel next to one another and between which the secondary windings (2.1 to 2.s) of the actuators (3.1 to 3.s) are arranged.

4. A system according to claim 1, **characterized by** two primary windings (1.1, 1.2) which are arranged orthogonally with respect to each other.

5. A system according to claim 1, **characterized by** three primary windings (1.1, 1.2, 1.3) which are arranged orthogonally with respect to each other.

6. A system according to claim 1, **characterized by** at least one primary winding (1.1 to 1.p) which locally influences at least one secondary winding (2.1 to 2.s) of an actuator (3.1 to 3.s).

7. A system according to claim 1, **characterized by** a primary winding (1) arranged in the form of a double line, with the secondary windings (2.1 to 2.s) of the actuators (3.1 to 3.s) being arranged between the double line.

8. A system according to one of the preceding claims, **characterized in that** at least one primary winding is provided with a ferrite core.

9. A system according to one of the preceding claims, **characterized in that** the at least one primary winding is wired with a power factor correction capacitor (6).

10. A system according to at least one of the preceding claims, **characterized in that** the actuators are provided with transmission devices which transmit radio signals containing interesting actuator information to a central receiving device (9) which is connected with the process computer (10), so that a bidirectional exchange of information is possible between the process computer and the actuators.

11. A system according to at least one of the preceding claims, **characterized in that** the secondary windings (2.1 to 2.s) are wired with a power factor correction capacitor (6).

12. A system according to at least one of the preceding claims, **characterized in that** the secondary windings (2.1 to 2.s) are wired with an AC/DC actuator which charges an energy storage device (8).

## Revendications

1. Système avec une machine (5) comprenant une pluralité d'actionneurs (3.1 à 3.s), en particulier un automate de fabrication, qui comporte un calculateur de processus (10), et avec un dispositif émetteur central (9) relié à ce calculateur de processus,
- dans lequel au moins un enroulement primaire (1, 1.1 à 1.p) alimenté par un oscillateur à moyenne fréquence (4) est prévu pour créer un champ magnétique en vue de l'alimentation sans fil des actionneurs (3.1 à 3.s) en énergie électrique, et
- dans lequel chaque actionneur est équipé d'un dispositif récepteur qui reçoit les signaux radio du dispositif émetteur central,
**caractérisé en ce que** chaque actionneur (3.1 à 3.s) présente plusieurs enroulements secondaires (2.1 à 2.s) capables d'absorber de l'énergie à partir du champ magnétique à moyenne fréquence et perpendiculaires les uns aux autres.

2. Système selon la revendication 1, **caractérisé en ce qu'**il comporte un seul enroulement primaire (1) incluant globalement les enroulements (2.1 à 2.s) des actionneurs (3.1 à 3.s).

3. Système selon la revendication 1, **caractérisé en ce qu'**il comporte plusieurs enroulements primaires (1.1, 1.2) disposés parallèlement les uns à côté des autres, entre lesquels les enroulements secondaires (2.1 à 2.s) des actionneurs (3.1 à 3.s) sont disposés.

4. Système selon la revendication 1, **caractérisé en ce qu'**il comporte deux enroulements primaires (1.1, 1.2) perpendiculaires l'un à l'autre.

5. Système selon la revendication 1, **caractérisé en ce qu'**il comporte trois enroulements primaires (1.1, 1.2, 1.3) perpendiculaires les uns aux autres.

6. Système selon la revendication 1, **caractérisé en ce qu'**il comprend au moins un enroulement primaire (1.1 à 1.p) influençant localement au moins un enroulement secondaire (2.1 à 2.s) d'un actionneur (3.1 à 3.s).

7. Système selon la revendication 1, **caractérisé en ce qu'**il comporte un enroulement primaire (1) réalisé sous la forme d'une double ligne, les enroulements secondaires (2.1 à 2.s) des actionneurs (3.1 à 3.s) étant disposés entre la double ligne.

8. Système selon une au moins des revendications précédentes, **caractérisé en ce qu'**au moins un enroulement primaire est pourvu d'un noyau en ferrite.

9. Système selon une au moins des revendications précédentes, **caractérisé en ce que** l'au moins un enroulement primaire est monté avec un condensateur de compensation (6).

10. Système selon une au moins des revendications précédentes, **caractérisé en ce que** les actionneurs sont munis de dispositifs émetteurs qui transmettent des signaux radio contenant des informations d'intérêt sur les actionneurs à un dispositif récepteur central (9) relié au calculateur de processus (10), de telle manière qu'un échange bidirectionnel d'informations soit possible entre le calculateur de processus et les actionneurs.

11. Système selon une au moins des revendications précédentes, **caractérisé en ce que** les enroulements secondaires (2.1 à 2.s) sont connectés avec un condensateur de compensation (6).

12. Système selon une au moins des revendications précédentes, **caractérisé en ce que** les enroulements secondaires (2.1 à 2.s) sont montés avec un convertisseur CA/CC qui charge un accumulateur d'énergie (8).
